# EUROPEAN PATENT APPLICATION

(11) **EP 2 099 046 A2**
(43) Date of publication of application: **09.09.2009**
(21) Application number: 09003319.2
(22) Date of filing: 06.03.2009
(51) Int. Cl.: H01H 25/04

(54) **Turn signal switch device**

(30) Priority: 07.03.2008 JP 2008057813
(71) Applicant: ALPS ELECTRIC CO., LTD., Tokyo 145-8501 (JP)
(72) Inventor: Miura, Taku, Tokyo 145-8501 (JP)
(74) Representative: Klunker . Schmitt-Nilson . Hirsch

(57) **Abstract**

A turn signal switch device includes an operating lever (1), a holder (2) supporting the operating lever (1) so as to be rotatable along a first operation plane, and a casing (3) supporting the holder (2) so as to be rotatable along a second operation plane which intersects the first operation plane. The casing (3) has a first case member (5) and a second case member (6) integrated by snapping. The casing is mounted on a housing (7) that is a stator member on the side of a vehicle by using fixing screws (8). Outer wall portions of the first case member (5) and the second case member (6) are respectively provided with screw insertion portions (51,61) which have holes or cutouts which allow the fixing screws (8) to be inserted therethrough and overlap each other, and the casing (3) is fastened and fixed to the housing (7) by screwing the fixing screws (8) inserted through the screw insertion portions (51,61), respectively, of the first and second case members (5,6) into female thread holes of the housing (7).

## Description

### Cross Reference to Related Applications

The present application contains subject matter related to Japanese Patent Application JP2008-057813 filed in the Japanese Patent Office on March 07, 2008, the entire contents of which being incorporated herein by reference.

### BACKGROUND

### 1. Technical Field

The present invention relates to a turn signal switch device which is additionally provided in a steering column or the like of an automobile and is used as a turn signal, and particularly, to an attachment structure when a casing which rotatably supports an operating lever is mounted on a housing that is a stator member on the side of a vehicle.

### 2. Related Art

In a turn signal switch device of an automobile, a base of an operating lever is journalled to a holder, and is rotatable along a first operation plane, and this holder is journalled to the casing and is rotatable along a second operation plane which intersects the first operation plane. Accordingly, when the operating lever is tilted along the first operation plane, the holder does not rotate, and when the operating lever 1 is tilted along the second operation plane, the holder rotates together. The casing is a box-shaped body having an opening, and receives the holder, an actuating member, a spring member, etc., and the operating lever protrudes through this opening. Generally, the casing is assembled by snapping a pair of case members, and a pivot portion (or bearing portion) provided in the holder is rotatably supported by bearing portions (or pivot portions) provided in both the case members. Also, a rotation centerline when the operating lever rotates with respect to the holder, and a rotation centerline when the operating lever and the holder rotate with respect to the casing are set to be substantially orthogonal to each other.

When this turn signal switch device is attached to a vehicle, the casing is mounted on and fixed to a receiving portion of a housing integrated with a steering column or the like. In the turn signal switch device mounted on a vehicle in this way, a left turn or right turn lamp is operated to blink on and off when the operating lever is tilted to a right or left direction indicating position along the second operation plane from a neutral position. Additionally, when the operating lever is tilted along the first operation plane, beam switching operation or passing operation will be performed.

In the related art, one which is adapted such that a casing is fastened and fixed to a housing by inserting fixing screws through proper places of the casing and screwing the fixing screws into female thread holes of the housing in order to enhance the strength of attachment of a turn signal switch device to the housing that is a stator member on the side of a vehicle, is known (for example, refer to Japanese Unexamined Patent Application Publication No. 2005-239162).

Meanwhile, the aforementioned turn signal switch device of the related art has an attachment structure in which one case member which constitutes the casing is screwed and fastened to the housing that is a stator member on the side of a vehicle. Therefore, when an operating force to the operating lever has been exerted on the casing as an excessive load, there is a concern that the opening of the casing may spread and the operating lever may come off from the casing. Specifically, when the operating lever is tilted along the first operation plane by a strong operating force, an excessive load is applied to a place of the casing which journals the holder, and this excessive load is the force which is going to press and extend the opening of the casing, i.e., the force which is going to disassemble the case members which are snapped together. Thus, when an excessive load exceeding a snapping force acts on the other case member which is not screwed and fixed to the housing, the opening of the casing will expand, and the operating lever will come off easily.

### SUMMARY

It is desirable to provide a turn signal switch device with no concern that an operating lever may come off even if an excessive operating force is applied to the operating lever.

A turn signal switch device according to an aspect of the invention includes an operating lever; a holder supporting the operating lever so as to be rotatable along a first operation plane; and a casing supporting the holder so as to be rotatable along a second operation plane which intersects the first operation plane. The casing has a first case member and a second case member integrated by snapping, and the casing is mounted on a housing that is a stator member on the side of a vehicle by using fixing screws. Outer wall portions of the first case member and the second case member are respectively provided with screw insertion portions which have holes or cutouts which allow the fixing screws to be inserted therethrough and overlap each other. The casing is fastened and fixed to the housing by screwing the fixing screws inserted through the screw insertion portions, respectively, of the first and second case members into female thread holes of the housing.

As described above, if the first case member and the second case member which constitute the casing of the turn signal switch device all have the screw insertion portions, and both the screw insertion portions which overlap each other are screwed to the housing that is a stator member on the side of a vehicle, both the first case member and the second case member are fastened to the housing. Therefore, the disassembling-resistant strength of the casing can be increased remarkably. Accordingly, even when an excessive load exceeding the snapping force of the first and second case members has been exerted on both the first case member or the second case member by an excessive operating force to the operating lever, there is no concern that the opening of the casing may spread in an undesirable manner and the operating lever may come off.

In the above construction, both the screw insertion portions of the first case member and the second case member may have circular holes. However, preferably, at least one of the screw insertion portions has cutouts or long holes through which the fixing screws be inserted. By doing so, even if some error exists in the positional relationship between the screw insertion portions which overlap each other when the first and second case members are snapped together, the fixing screws can be easily inserted through both the screw insertion portions. Therefore, the workability when the turn signal switch device is attached to the housing improves.

Additionally, in the above configuration, if screw insertion portions respectively protrude in the shape of a plate piece from both outer side walls of the first case member which are substantially parallel to each other, and the screw insertion portions respectively protrude in the shape of a plate piece from both outer side walls of the second case member which are substantially parallel to each other, each of the screw insertion portions is able to have a simple shape which is easily fastened to the housing, and the casing can be firmly fixed to the housing by few screw insertion portions.

In the turn signal switch device of the aspect of the invention, outer wall portions of the first case member and the second case member which are snapped and constitutes the casing are respectively provided with screw insertion portions which have holes or cutouts which allow the fixing screws to be inserted therethrough and overlap each other, and the casing is fastened and fixed to the housing by screwing the fixing screws into female thread holes of the housing that is a stator member on the side of a vehicle. Therefore, the disassembling-resistant strength of the casing is extremely high, and even when an excessive load exceeding the snapping force of the first and second case members has been exerted on by an excessive operating force to the operating lever, there is no concern that the opening of the casing may spread and the operating lever may come off.

### BRIEF DESCRIPTION OF THE DRAWINGS

Fig. 1 is a perspective view showing a state where a turn signal switch device according to an embodiment of the invention is attached to a housing;
Fig. 2 is an exploded perspective view corresponding to Fig. 1; and
Fig. 3 is a sectional view showing chief parts of Fig. 1.

### DESCRIPTION OF EXEMPLARY EMBODIMENTS

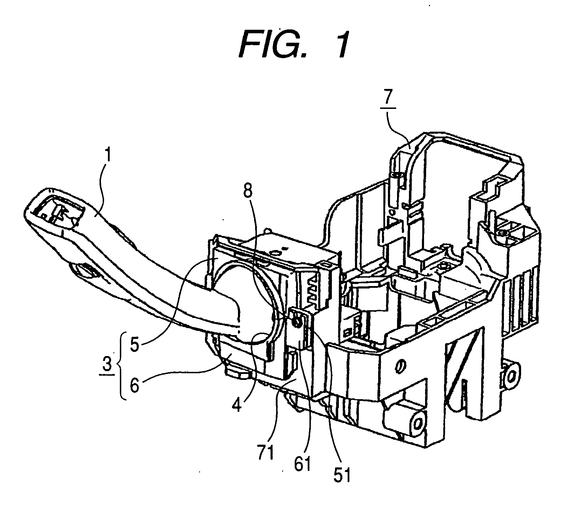

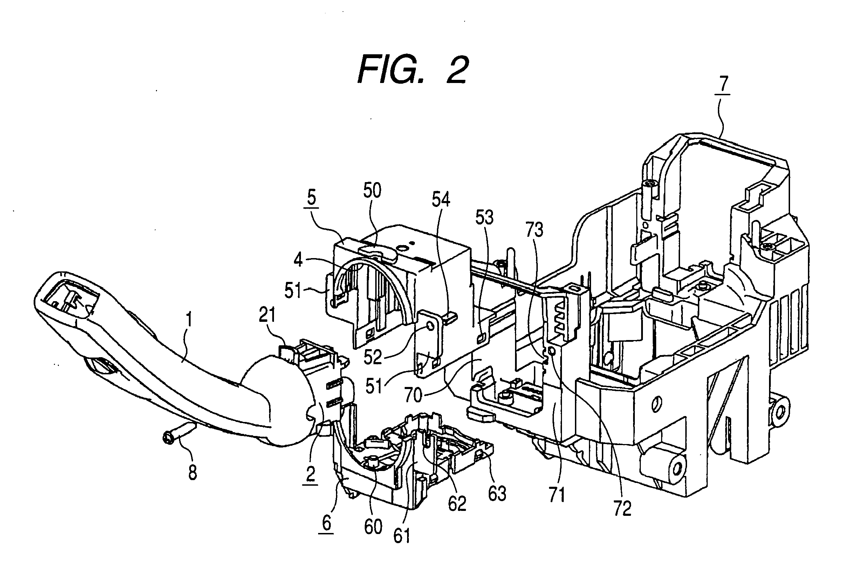

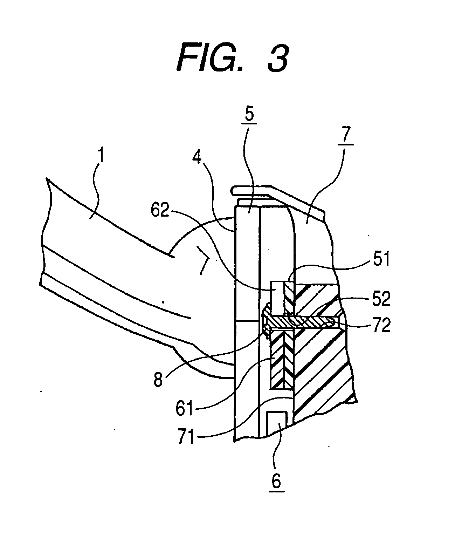

An embodiment of the invention will now be described with reference to the accompanying drawings. Fig. 1 is a perspective view showing a state where a turn signal switch device according to an embodiment of the invention is attached to a housing, Fig. 2 is an exploded perspective view corresponding to Fig. 1, and Fig. 3 is a sectional view showing chief parts of Fig. 1.

The turn signal switch device shown in these drawings is mainly composed of an operating lever 1; a holder 2 which rotatably supports the operating lever 1 along a first operation plane; a casing 3 which is a box-shaped body having an opening 4 and which rotatably supports the holder 2 along a second operation plane which intersects the first operation plane; an actuating member, a slider receptacle body, a spring member, and a printed circuit board (not shown), which are disposed at the inside and bottom of the casing 3, and the like. The casing 3 is assembled by integrating a first case member 5 and a second case member 6 by snapping. This turn signal switch device is attached to a housing 7 that is a stator member on the side of a vehicle, and is used as a turn signal, and the housing 7 is integrated with a steering column (not shown).

A base of the operating lever 1 is journalled inside the holder 2, and the holder 2 is supported such that a projection 21 with a circular-arc cross-section and a recess (not shown) with a circular cross-section are rotatable with a bearing portion 50 of the first case member 5 and a pivot 60 of the second case member 6 as a rotational fulcrum. The holder 2 is housed inside the casing 3, and the operating lever 1 protrudes outward from the opening 4 of the casing 3. When the operating lever 1 is tilted along the first operation plane, the holder 2 does not rotate, and when the operating lever 1 is tilted along the second operation plane, the holder 2 rotates together. Additionally, a rotation centerline when the operating lever 1 rotates with respect to the holder 2, and a rotation centerline when the operating lever 1 and the holder 2 rotate with respect to the casing 3 are set to be substantially orthogonal to each other.

Each of the first case member 5 and the second case member 6 which constitute the casing 3 is provided with a pair of a screw insertion portion 51 and a screw insertion portion 61. A pair of screw insertion portions 51 protrudes in the shape of a plate piece from both outer side walls of the first case member 5 which are substantially parallel to each other, and a pair of screw insertion portions 61 protrudes in the shape of a plate piece from both outer side walls of the second case member 6 which are substantially parallel to each other. The screw insertion portions 51 of the first case member 5 have almost the same shape, and circular holes 52 are respectively formed in given positions of the screw insertion portions. The screw insertion portions 61 of the second case member 6 also have almost the same shape, and U-grooved circular holes 62 are respectively formed in given positions of the screw insertion portions. Additionally, locking holes 53 are provided in a plurality of places of the first case member 5, and locking claws 63 are provided in a plurality of places of the second case member 6 corresponding to the locking holes 53, respectively. The first case member 5 and the second case member 6 are snapped together into an integral casing 3 by fitting the locking claws 63 into the corresponding locking holes 53. When the first and second case members 5 and 6 are snapped together, as shown in Fig. 1, the screw insertion portions 51 and 61 overlap each other at both side portions of the casing 3, and the circular hole 52 and the cutout 62 are brought into a communicating state. Fixing screws 8 are inserted through the circular holes 52 and the cutouts 62 which are made to communicate with each other, and the fixing screws 8 are screwed into female thread holes 72 of the housing 7. Additionally, protruding strip portions 54 protrudes from the outer side walls of the first case member 5 in the vicinity of the screw insertion portions 51, respectively. Since each protruding strip portion 54 is slidably inserted into a guide groove 73 of the housing 7, the casing 3 can be smoothly fitted into a receiving portion 70 of the housing 7 without any positional deviation while the protruding strip portion 54 is guided by the guide groove 73.

When the operating lever 1 is tilted along the first operation plane, a driving projection provided at the base of the operating lever 1 slidingly moves a slider receptacle (not shown) within the casing 3. Therefore, a contact switching operation is performed on a printed circuit board (not shown) which is installed at the bottom of the second case member 6 so that a required electric signal is output. When the operating lever 1 is tilted along the second operation plane, the holder 2 rotates integrally, and a driving projection which is provided in an actuating member (not shown) which interlocks with the holder 2 slidingly moves the slider receptacle (not shown) within the casing 3. Therefore, a contact switching operation is performed on the printed circuit board so that a required electric signal is output.

The turn signal switch device configured in this way is used by mounting the casing 3 on the receiving portion 70 of the housing 7 that is a stator member on the side of a vehicle. When the turn signal switch device is attached to the housing 7, the screw insertion portions 51 and 61 which protrude from both side portions of the casing 3 and overlap each other are fastened and fixed to a front wall portion 71 of the housing 7 by using the fixing screws 8. That is, the front wall portion 71 of the housing 7 is formed with the female thread holes 72. When the protruding strip portions 54 which protrude from both side portions of the casing 3 are inserted into the guide corresponding grooves 73 of the housing 7, the circular holes 52 and the cutouts 62 of the screw insertion portions 51 and 61 are set to be communicate with the female thread holes 72. Therefore, the screw insertion portions 51 and 61 can be strongly pinched by heads of the fixing screws 8 and the front wall portion 71 by screwing and fastening the fixing screws 8 to the female thread holes 72. Accordingly, the first and second case members 5 and 6 are fastened and fixed to the housing 7 via the screw insertion portions 51 and 61.

In the turn signal switch device mounted on a vehicle in this way, a left turn or right turn lamp is operated to blink on and off when the operating lever 1 is tilted to a right or left direction indicating position along the second operation plane from a neutral position. Additionally, when the operating lever 1 is tilted along the first operation plane, beam switching operation or passing operation will be performed.

As described above, in the turn signal switch device according to this embodiment, the first case member 5 and the second case member 6 which constitute the casing 3 all have the screw insertion portions 51 and 61, and both the screw insertion portions 51 and 61 which overlap each other are screwed and fastened to the housing 7 that is a stator member on the side of a vehicle. Therefore, when this turn signal switch device is attached to the housing 7, both the first case member 5 and the second case member 6 are fastened to the housing 7, and the disassembling-resistant strength of the casing 3 increases remarkably. For this reason, even when an excessive operating force is applied to the operating lever 1, and an excessive load exceeding the snapping force of both the first case member 5 and the second case member 6 has been exerted on the first case member 5 or the second case member 6, there is no concern that the opening 4 of the casing 3 may spread in an undesirable manner and the operating lever 1 may come off, and reliability increases.

Additionally, in this turn signal switch device, the screw insertion portions 51 respectively protrude in the shape of a plate piece from both outer side walls of the first case member 5 which are substantially parallel to each other, and the screw insertion portions 61 respectively protrude in the shape of a plate piece from both outer side walls of the second case member 6 which are substantially parallel to each other. Therefore, the casing 3 can be firmly fixed to the housing 7 by few screw insertion portions 51 and 61 although each of the screw insertion portions 51 and 61 has a simple shape which is easily fastened to the housing 7. However, the shape, number, formation positions, and the like of the screw insertion portions 51 and 61 can be suitably selected.

Additionally, in this turn signal switch device, when the first and second case members 5 and 6 are integrated by snapping, the screw insertion portions 51 and 61 overlap each other and the circular holes 52 and the cutouts 62 communicate with each other. Therefore, even if some error exists in the positional relationship between the screw insertion portions 51 and 61, the fixing screws 8 can be easily inserted through both the screw insertion portions 51 and 61. In this case, the cutouts provided in the screw insertion portions 51 and the circular holes provided in the screw insertion portions 61 may be made to communicate with each other, and the cutouts may be long holes. In short, if at least one of the screw insertion portions 51 and 61 of the first and second case members 5 and 6 which overlap each other has cutout or long holes through which the fixing screws 8 are inserted, the fixing screws 8 can be easily inserted through both the screw insertion portions 51 and 61. Therefore, the workability when the turn signal switch device is attached to the housing 7 improves. It is to be noted herein that it is also possible to adopt a configuration in which the circular holes of the screw insertion portions 51 and 61 are made to communicate with each other, and the fixing screws 8 are inserted into the circular holes.

It should be understood by those skilled in the art that various modifications, combinations, sub-combinations and alternations may occur depending on design requirements and other factors insofar as they are within the scope of the appended claims of the equivalents thereof.

## Claims

1. A turn signal switch device comprising:
an operating lever (1);
a holder (2) supporting the operating lever (1) so as to be rotatable along a first operation plane; and
a casing (3) supporting the holder (2) so as to be rotatable along a second operation plane which intersects the first operation plane,
the casing (3) having a first case member (5) and a second case member (6) integrated by snapping, and
the casing (3) being mounted on a housing (7) that is a stator member on the side of a vehicle by using fixing screws (8),
wherein outer wall portions of the first case member (5) and the second case member (6) are respectively provided with screw insertion portions (51, 61) which have holes or cutouts which allow the fixing screws (8) to be inserted therethrough and overlap each other, and
wherein the casing (3) is fastened and fixed to the housing (7) by screwing the fixing screws (8) inserted through the screw insertion portions (51, 61), respectively, of the first and second case members (5, 6) into female thread holes (72) of the housing (7).

2. The turn signal switch device according to Claim 1 **characterized in that** at least one of the screw insertion portions (51, 61) of the first case member (5) and the second case member (6) has cutouts or long holes which allow the fixing screws (72) to be inserted therethrough.

3. The turn signal switch device according to Claim 1 or 2 **characterized in that** the screw insertion portions (51) respectively protrude in the shape of a plate piece from both outer side walls of the first case member (5) which are substantially parallel to each other, and the screw insertion portions (61) respectively protrude in the shape of a plate piece from both outer side walls of the second case member (6) which are substantially parallel to each other.
